# EUROPEAN PATENT APPLICATION

(11) **EP 2 124 079 A2**
(43) Date of publication of application: **25.11.2009**
(21) Application number: 09159912.6
(22) Date of filing: 11.05.2009
(51) Int. Cl.: G02B 6/138

(54) **Manufacturing method of optical waveguide device**

(30) Priority: 19.05.2008 JP 2008130727
(71) Applicant: Nitto Denko Corporation, Ibaraki-shi, Osaka 567-8680 (JP)
(72) Inventor: Hodono, Masayuki, Ibaraki-shi Osaka 567-8680 (JP); Shimizu, Yusuke, Ibaraki-shi Osaka 567-8680 (JP); Fujisawa, Junichi, Ibaraki-shi Osaka 567-8680 (JP)
(74) Representative: Behnisch, Werner

(57) **Abstract**

To provide a manufacturing method of an optical waveguide device which is capable of suppressing the surface roughening of core side surfaces of an optical waveguide when the optical waveguide is formed on a surface of a metal substrate. An under cladding layer 2 containing an irradiation light absorbing agent is formed on a surface of a metal substrate 1 which is a roughened surface. Alternatively, an irradiation light absorbing layer is formed prior to the formation of the under cladding layer free from the irradiation light absorbing agent. In a subsequent step of forming cores 3, irradiation light directed onto a photosensitive resin layer for the formation of the cores 3 and transmitted through the photosensitive resin layer is absorbed or attenuated in the under cladding layer 2 containing the above-mentioned irradiation light absorbing agent or in the irradiation light absorbing layer.

## Description

### BACKGROUND OF THE INVENTION

### 1. Field of the Invention

The present invention relates to a manufacturing method of an optical waveguide device for widespread use in optical communications, optical information processing and other general optics.

### 2. Description of the Related Art

In general, an optical waveguide for an optical waveguide device is constructed such that cores serving as a passageway for light are formed in a predetermined pattern on a surface of an under cladding layer, and such that an over cladding layer is formed so as to cover the cores. Such an optical waveguide is typically formed on a surface of a substrate such as a metal substrate and the like, and is manufactured together with the substrate to provide an optical waveguide device.

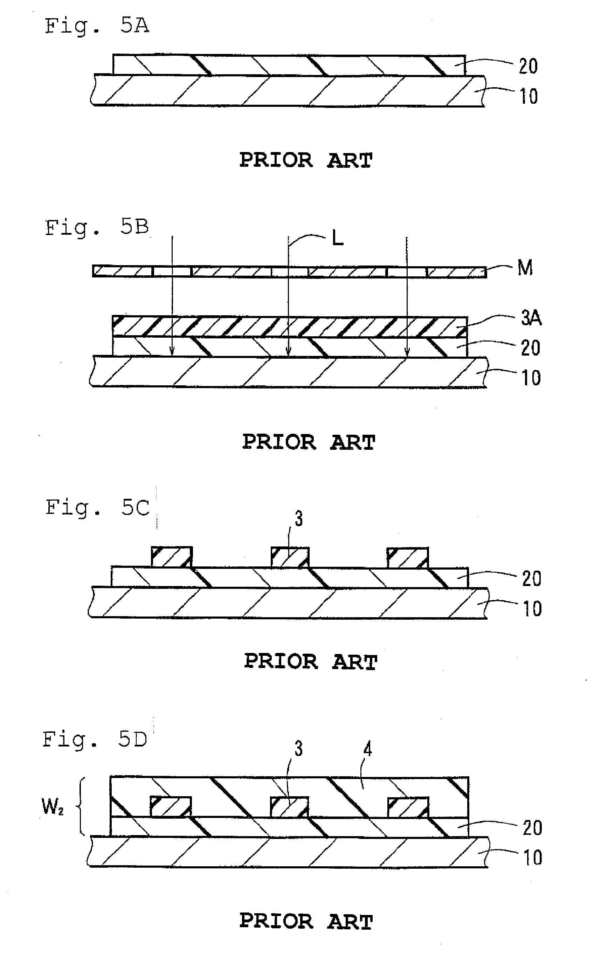

A conventional manufacturing method of such an optical waveguide device is as follows. First, as shown in Fig. 5A, an under cladding layer 20 is formed on a surface of a substrate 10. Next, as shown in Fig. 5B, a photosensitive resin for the formation of cores is applied to a surface of the under cladding layer 20 to form a photosensitive resin layer 3A. Next, irradiation light L is directed through a photo mask M formed with an opening pattern corresponding to the pattern of the cores onto the above-mentioned photosensitive resin layer 3A. The irradiation light L is caused to reach the above-mentioned photosensitive resin layer 3A through openings of the above-mentioned opening pattern, thereby exposing portions of the photosensitive resin layer 3A thereto. The above-mentioned irradiation light L impinges upon the above-mentioned photosensitive resin layer 3A at right angles thereto. A photoreaction proceeds in the portions exposed to the irradiation light L so that the exposed portions are hardened. Then, development is performed using a developing solution to dissolve away unexposed portions, as shown in Fig. 5C. The remaining exposed portions become cores 3 in a predetermined pattern. The cores 3 are typically formed to be rectangular in sectional configuration. Thereafter, as shown in Fig. 5D, an over cladding layer 4 is formed on the surface of the above-mentioned under cladding layer 20 so as to cover the cores 3. In this manner, an optical waveguide W₂ is formed on the surface of the above-mentioned substrate 10 (see, for example, Japanese Patent Application Laid-Open No. 2004-341454).

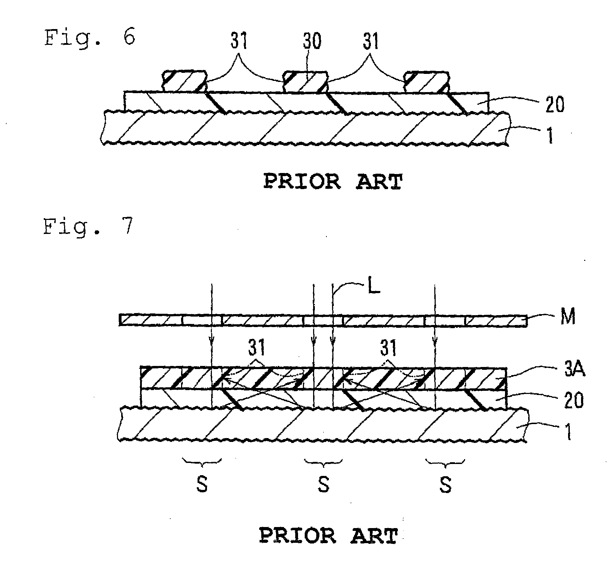

In such a conventional method, however, the side surfaces 31 of cores 30 have been formed as roughened surfaces in some cases, as shown in Fig. 6. It has been found that an optical waveguide having such cores 30 presents a problem in that the propagation losses of light propagating inside the cores 30 are increased.

The present inventors have made studies to diagnose the cause of the formation of the side surfaces 31 of the cores 30 as the roughened surfaces. In the course of the studies, the present inventors have found that the surface roughening of the side surfaces 31 of the above-mentioned cores 30 occurs when a metal substrate 1 made of metal foil such as SUS (Steel Use Stainless) foil is used as the above-mentioned substrate 10 with reference to Figs. 5A to 5D, as shown in Fig. 7. As a result of further studies, it has been found that the metal substrate 1 made of the above-mentioned metal foil and the like has a surface which is a roughened surface. For this reason, in the above-mentioned core formation step, the irradiation light L for use in the exposure passes through the photosensitive resin layer 3A for the core formation and the under cladding layer 20, and thereafter is reflected diffusely from the roughened surface of the above-mentioned metal substrate 1 because of the roughened surface thereof, as shown in Fig. 7. The diffusely reflected irradiation light L is transmitted through the above-mentioned under cladding layer 20 obliquely upwardly from below. Then, boundary surfaces (surfaces which are to become the side surfaces 31) for the patterning of the cores 30 are exposed to the diffusely reflected irradiation light L directed obliquely from below in future core regions S included in the photosensitive resin layer 3A for the core formation. This exposure to the light directed obliquely from below results from the above-mentioned diffuse reflection, and is uneven. Thus, it has been found that an unwanted photoreaction proceeds unevenly at the surfaces which are to become the side surfaces 31 of the cores 30 because of the exposure to the light directed obliquely from below to result in the increased width of the cores 30 and the formation of the side surfaces 31 of the cores 30 as the roughened surfaces. In other words, the surfaces which are to become the side surfaces 31 of the cores 30 show variations in the degree of exposure to light or have both the unexposed portions and the exposed portions because of the diffuse reflection of the above-mentioned irradiation light L. In a subsequent step of development, the portions low in the degree of exposure to light and the unexposed portions of the surfaces which are to become the side surfaces 31 of the above-mentioned cores 30 are dissolved away, and the portions high in the degree of exposure to light and the exposed portions remain unremoved. Thus, the side surfaces 31 of the cores 30 are formed as the roughened surfaces.

The above-mentioned metal substrate 1 is in some cases used as a supporting element for the formation of an optical waveguide as mentioned above, but is in many cases formed with an electric circuit on the opposite surface thereof from the surface with the above-mentioned optical waveguide formed thereon. For this circumstantial reason, it is impossible to simply replace the metal substrate 1 with a substrate made of other materials such as synthetic resin and the like.

In view of the foregoing, it is an object of the present invention to provide a manufacturing method of an optical waveguide device which is capable of suppressing the surface roughening of core side surfaces of an optical waveguide when the optical waveguide is formed on a surface of a metal substrate.

To accomplish the above-mentioned object, a first aspect of the present invention is intended for a method of manufacturing an optical waveguide device, the method comprising the steps of: forming an under cladding layer on a surface of a metal substrate which is a roughened surface; forming a photosensitive resin layer for core formation on a surface of the under cladding layer; and directing irradiation light onto the photosensitive resin layer to expose the photosensitive resin layer in a predetermined pattern to the irradiation light, thereby forming exposed portions of the photosensitive resin layer into cores, wherein, in the step of forming the cores, the irradiation light directed onto said photosensitive resin layer is irradiation light transmitted through the photosensitive resin layer, reaching the roughened surface of said metal substrate and reflected there from, and wherein said under cladding layer contains an irradiation light absorbing agent for absorbing said irradiation light.

A second aspect of the present invention is intended for a method of manufacturing an optical waveguide device, the method comprising the steps of: forming an under cladding layer on a surface of a metal substrate which is a roughened surface; forming a photosensitive resin layer for core formation on a surface of the under cladding layer; and directing irradiation light onto the photosensitive resin layer to expose the photosensitive resin layer in a predetermined pattern to the irradiation light, thereby forming exposed portions of the photosensitive resin layer into cores, wherein, in the step of forming the cores, the irradiation light directed onto said photosensitive resin layer is irradiation light transmitted through the photosensitive resin layer, reaching the roughened surface of said metal substrate and reflected there from, and wherein an irradiation light absorbing layer for absorbing said irradiation light is formed on the surface of the metal substrate prior to the formation of said under cladding layer.

In the manufacturing method of the optical waveguide device according to the first aspect of the present invention, the under cladding layer containing the irradiation light absorbing agent is formed on the surface of the metal substrate. For this reason, in the step of forming the cores, the irradiation light transmitted through the photosensitive resin layer for the core formation is absorbed or attenuated in the above-mentioned under cladding layer by the irradiation light absorbing agent before or after being reflected diffusely from the surface of the metal substrate. Thus, part of the irradiation light reflected diffusely from the surface of the metal substrate, transmitted through the under cladding layer obliquely upwardly from below and reaching the photosensitive resin layer for the core formation is significantly reduced. As a result, in the photosensitive resin layer for the core formation, there is little irradiation light to which surfaces which are to become the side surfaces of the cores are exposed and which thereby makes the surfaces roughened. This effectively suppresses the surface roughening of the side surfaces of the cores. According to the first aspect, the irradiation light absorbing agent is contained in the under cladding layer, and a new layer for the absorption of the irradiation light is not provided. This is advantageous in preventing the increase in the total thickness of the optical waveguide device.

In the manufacturing method of the optical waveguide device according to the second aspect of the present invention, the irradiation light absorbing layer under the under cladding layer is formed in place of the under cladding layer containing the irradiation light absorbing agent of the above-mentioned first aspect. For this reason, in the step of forming the cores, the irradiation light transmitted through the photosensitive resin layer for the core formation and through the under cladding layer is absorbed or attenuated in the above-mentioned irradiation light absorbing layer before or after being reflected diffusely from the surface of the metal substrate. Thus, part of the irradiation light reflected diffusely from the surface of the metal substrate, transmitted through the irradiation light absorbing layer obliquely upwardly from below and reaching the photosensitive resin layer for the core formation is significantly reduced. As a result, the surface roughening of the side surfaces of the cores is significantly suppressed. The second aspect makes total thickness of the optical waveguide device greater than that of the first aspect because of the provision of the new irradiation light absorbing layer, but increases the effect of suppressing the surface roughening of the side surfaces of the cores because of the irradiation light absorbing property of the irradiation light absorbing layer.

Next, preferred embodiments according to the present invention will now be described in detail with reference to the drawings.

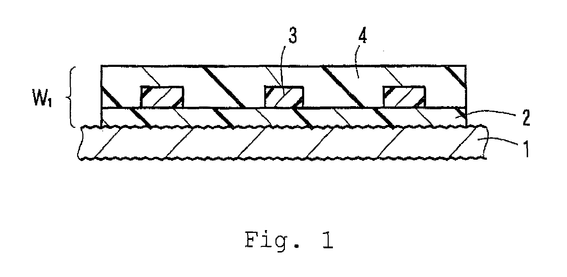

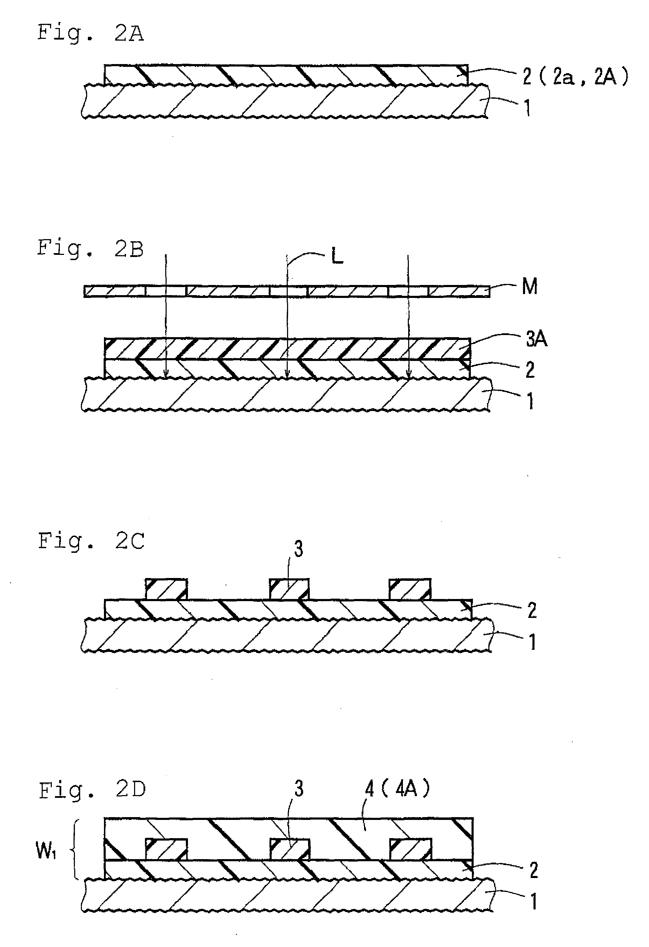

Fig. 1 shows an optical waveguide device provided by a manufacturing method of an optical waveguide device according to a first preferred embodiment of the present invention. This optical waveguide device includes a metal substrate 1 having a surface which is a roughened surface, and an optical waveguide W₁ formed on the surface of the metal substrate 1. This optical waveguide W₁ includes an under cladding layer 2 containing an irradiation light absorbing agent and formed on the surface of the above-mentioned metal substrate 1. The optical waveguide W₁ is constructed by forming a photosensitive resin layer 3A (with reference to Fig. 2B) on a surface of the above-mentioned under cladding layer 2, thereafter directing irradiation light L onto this photosensitive resin layer 3A to expose the photosensitive resin layer 3A in a predetermined pattern to the irradiation light L, thereby forming cores 3, and further forming an over cladding layer 4 over the cores 3 in a stacked manner. The irradiation light absorbing agent contained in the above-mentioned under cladding layer 2 performs an absorptive action for absorbing the irradiation light impinging upon the above-mentioned photosensitive resin layer 3A.

The manufacturing method of the optical waveguide device according to this preferred embodiment will be described in detail.

First, the above-mentioned metal substrate 1 (with reference to Fig. 2A) is prepared. Examples of this metal substrate 1 used herein include substrates made of stainless steel (SUS), copper, aluminum, nickel and the like. Of these, the stainless steel substrate is preferable. This is because the stainless steel substrate is excellent in resistance to thermal expansion and contraction so that various dimensions thereof are maintained substantially at their design values in the course of the manufacture of the above-mentioned optical waveguide device. This type of stainless steel substrate used typically is commercially available. Commercially available stainless steel substrates have both upper and lower surfaces which are roughened in the course of the manufacture thereof. The arithmetic mean roughness (Ra) of the surfaces of the commercially available stainless steel substrates is in the range of 100 to 200 nm. For example, a metal substrate having a thickness in the range of 20 µm to 1 mm is used as the above-mentioned metal substrate 1.

Next, as shown in Fig. 2A, a varnish prepared by dissolving a photosensitive resin for the formation of the under cladding layer 2 and the irradiation light absorbing agent in a solvent is applied to a predetermined region of the surface of the above-mentioned metal substrate 1 to form a coating layer 2a thereof. Examples of the above-mentioned photosensitive resin include photosensitive epoxy resins, and the like. The above-mentioned irradiation light absorbing agent is an absorbing agent for absorbing the irradiation light L such as ultraviolet light, visible light, infrared light, X-rays, alpha rays, beta rays, gamma rays and the like for use in the exposure of the photosensitive resin layer 3A for the formation of the cores 3 thereto in a subsequent step of forming the cores 3 (with reference to Figs. 2B and 2C), as mentioned above. The content of the irradiation light absorbing agent in the under cladding layer 2 is preferably in the range of 0.1 to 10% by weight. When the above-mentioned content is less than 0.1% by weight, the absorption and attenuation of the above-mentioned irradiation light L have a tendency to become insufficient. When the above-mentioned content is greater than 10% by weight, the photosensitive resin for the formation of the above-mentioned under cladding layer 2 is difficult to harden. Examples of the above-mentioned irradiation light absorbing agent include ultraviolet absorbing agents such as TINUVIN 384-2, TINUVIN 900, TINUVIN 928 and the like manufactured by Nihon Ciba-Geigy K.K., and the like. The application of the above-mentioned varnish is achieved, for example, by a spin coating method, a dipping method, a casting method, an injection method, an ink jet method and the like. Then, the above-mentioned coating layer 2a is dried by a heating treatment at 50 °C to 120 °C for 10 to 30 minutes, as required. This provides a photosensitive resin layer 2A for the formation of the under cladding layer.

Next, the photosensitive resin layer 2A is exposed to irradiation light. Examples of the above-mentioned irradiation light for the exposure used herein include visible light, ultraviolet light, infrared light, X-rays, alpha rays, beta rays, gamma rays and the like. Preferably, ultraviolet light is used. This is because the use of ultraviolet light achieves irradiation with large energy to provide a high rate of hardening, and an irradiation apparatus therefore is small in size and inexpensive to achieve the reduction in production costs. A light source of the ultraviolet light may be, for example, a low-pressure mercury-vapor lamp, a high-pressure mercury-vapor lamp, an ultra-high-pressure mercury-vapor lamp and the like. The dose of the ultraviolet light is typically 10 to 10000mJ/cm², preferably 50 to 3000mJ/cm²_{.}

After the above-mentioned exposure, a heating treatment is performed to complete a photoreaction. This heating treatment is performed at 80°C to 250°C , preferably at 100°C to 200°C, for 10 seconds to two hours, preferably for five minutes to one hour. This causes the above-mentioned photosensitive resin layer 2A to be formed into the under cladding layer 2, as shown in Fig. 2A. The thickness of the under cladding layer 2 is typically in the range of 1 to 50 µm, preferably in the range of 5 to 30 µm.

Next, as shown in Fig. 2B, the photosensitive resin layer 3A for the formation of the cores 3 (with reference to Fig. 2C) is formed on the surface of the above-mentioned under cladding layer 2. The formation of this photosensitive resin layer 3A is carried out in a manner similar to the process for forming the photosensitive resin layer 2A for the formation of the under cladding layer 2, which is described with reference to Fig. 2A. The material for the formation of the cores 3 used herein has a refractive index higher than that of the material for the formation of the above-mentioned under cladding layer 2 and the material for the formation of the over cladding layer 4 (with reference to Fig. 2D) to be described later. The adjustment of the refractive indices may be made, for example, by adjusting the selection of the types of the materials for the formation of the under cladding layer 2, the cores 3 and the over cladding layer 4 described above and the composition ratio thereof.

Thereafter, a photo mask M formed with an opening pattern corresponding to the cores 3 is placed over the photosensitive resin layer 3A for the formation of the above-mentioned cores 3. A portion of the photosensitive resin layer 3A corresponding to the above-mentioned opening pattern is exposed to the irradiation light L through this photo mask M. This exposure is performed in a manner similar to that in the process of forming the under cladding layer 2 mentioned earlier. During the above-mentioned exposure, the above-mentioned irradiation light L impinges upon the above-mentioned photosensitive resin layer 3A at right angles thereto to cause the photoreaction to proceed in portions exposed to the irradiation, thereby hardening the exposed portions. Part of the irradiation light L which has not contributed to the photoreaction is transmitted through the above-mentioned photosensitive resin layer 3A, and is absorbed or attenuated in the above-mentioned under cladding layer 2 by the irradiation light absorbing agent before or after being reflected diffusely from the surface of the metal substrate 1. Thus, part of the irradiation light L reflected diffusely from the surface of the metal substrate 1 and transmitted through the under cladding layer 2 obliquely upwardly from below is significantly reduced. As a result, there is little irradiation light to which surfaces which are to become the side surfaces of the cores 3 are exposed due to the diffuse reflection thereof in the photosensitive resin layer 3A for the formation of the cores 3. This suppresses the surface roughening of the side surfaces of the cores 3.

After the above-mentioned exposure, a heating treatment is performed in a manner similar to that in the process of forming the under cladding layer 2 mentioned earlier. Subsequently, development is performed using a developing solution. This dissolves away unexposed portions of the above-mentioned photosensitive resin layer 3A to cause portions of the photosensitive resin layer 3A remaining on the under cladding layer 2 to be formed into the pattern of the cores 3, as shown in Fig. 2C. The above-mentioned development employs, for example, an immersion method, a spray method, a puddle method and the like. Examples of the developing solution used herein include an organic solvent, an organic solvent containing an alkaline aqueous solution, and the like. The developing solution and conditions for the development are selected as appropriate depending on the composition of a photosensitive resin composition.

After the above-mentioned development, the developing solution remaining on the surface and the like of the photosensitive resin layer 3A formed in the pattern of the cores 3 is removed by a heating treatment. This heating treatment is typically performed at 80°C to 120°C for 10 to 30 minutes. This causes the photosensitive resin layer 3A formed in the pattern of the above-mentioned cores 3 to be formed into the cores 3. The surface roughening of the side surfaces of the cores 3 is suppressed, as mentioned earlier. The thickness of the above-mentioned cores 3 is typically in the range of 10 to 150 µm, preferably in the range of 20 to 100 µm. The width of the cores 3 is typically in the range of 8 to 50 µm, preferably in the range of 10 to 25 µm.

Next, as shown in Fig. 2D, a photosensitive resin layer 4A for the formation of the over cladding layer 4 is formed on the surface of the above-mentioned under cladding layer 2 so as to cover the cores 3. The formation of this photosensitive resin layer 4A is carried out in a manner similar to the process for forming the photosensitive resin layer 2A for the formation of the under cladding layer 2, which is described with reference to Fig. 2A. Thereafter, exposure to irradiation, a heating treatment and the like are performed in a manner similar to those in the process of forming the under cladding layer 2, to cause the above-mentioned photosensitive resin layer 4A to be formed into the over cladding layer 4. The thickness of the over cladding layer 4 (the thickness as measured from the surface of the cores) is typically in the range of 5 to 100 µm, preferably in the range of 10 to 80 µm.

In this manner, an optical waveguide device is provided in which the optical waveguide W₁ including the under cladding layer 2, the cores 3 and the over cladding layer 4 described above is formed on the surface of the metal substrate 1. The optical waveguide W₁ in this optical waveguide device has small light propagation losses to achieve good propagation of light because the surface roughening of the side surfaces of the cores 3 is suppressed.

In this preferred embodiment, adhesion between the metal substrate 1 and the under cladding layer 2 is enhanced by incorporating the irradiation light absorbing agent into the photosensitive resin serving as the material for the formation of the under cladding layer 2. Specifically, the photosensitive resin, which is generally high in rate of hardening, is hardened with insufficient wetting on the metal substrate 1. Thus, when hardened, the photosensitive resin has poor adhesion to the metal substrate 1. Additionally, the photosensitive resin is generally large in the amount of hardening shrinkage. Thus, when the photosensitive resin is hardened, the internal stresses within the photosensitive resin are increased to result in a force which tends to separate from the metal substrate 1. To solve the problem, the hardening of the photosensitive resin serving as the material for the formation of the under cladding layer 2 on the surface of the metal substrate 1, with the irradiation light absorbing agent contained in the photosensitive resin serving as the material for the formation of the under cladding layer 2, as in this preferred embodiment decreases the amount of light exposure near the interface with the metal substrate 1 by means of the irradiation light absorbing agent to lower the rate of hardening and to decrease the amount of hardening shrinkage. Thus, the hardened under cladding layer 2 adheres more strongly to the metal substrate 1. In other words, the adhesion of the hardened under cladding layer 2 to the metal substrate 1 is controlled by adjusting the content of the irradiation light absorbing agent in the under cladding layer 2.

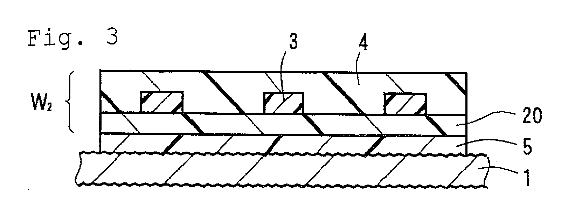

Fig. 3 shows an optical waveguide device provided by a manufacturing method of an optical waveguide device according to a second preferred embodiment of the present invention. This optical waveguide device includes the metal substrate 1 similar to that of the above-mentioned first preferred embodiment and having a surface which is a roughened surface, an irradiation light absorbing layer 5 formed on the surface of this metal substrate 1, and an optical waveguide W₂ formed on a surface of the irradiation light absorbing layer 5. This optical waveguide W₂ includes an under cladding layer (free from the irradiation light absorbing agent) 20 formed on the surface of the above-mentioned irradiation light absorbing layer 5, the cores 3 formed in a predetermined pattern on a surface of the under cladding layer 20 and similar to those of the above-mentioned first preferred embodiment, and the over cladding layer 4 formed on the surface of the above-mentioned under cladding layer 20 so as to cover the cores 3 and similar to that of the above-mentioned first preferred embodiment. Like reference numerals and characters are used to designate parts similar to those of the first preferred embodiment shown in Fig. 1.

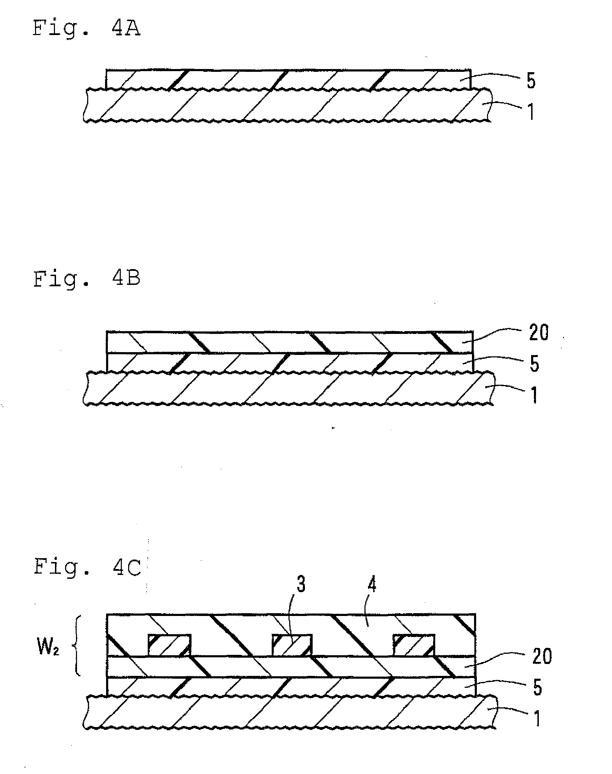

The manufacturing method of the optical waveguide device according to this preferred embodiment is as follows. First, as shown in Fig. 4A, the irradiation light absorbing layer 5 for absorbing irradiation light such as ultraviolet light and the like is formed in a predetermined region of the above-mentioned metal substrate 1. A material for the formation of this irradiation light absorbing layer 5 used herein includes resin, such as polyimide resin, which has in itself the property of absorbing the irradiation light such as ultraviolet light and the like. Further, this resin, such as polyimide resin, which has the property of absorbing ultraviolet light may contain the ultraviolet absorbing agent as contained in the under cladding layer 2 (with reference to Fig. 1) in the above-mentioned first preferred embodiment. Alternatively, the resin, such as polyimide resin, which has the property of absorbing ultraviolet light, may contain a coloring matter or dyestuff having the property of absorbing ultraviolet light. Examples of the coloring matter include SDO-7, PLAST BLACK DA-423, PLAST BLACK 8995 and the like manufactured by Arimoto Chemical Co., Ltd. The resin containing the ultraviolet absorbing agent and the coloring matter is not limited to the above-mentioned polyimide resin, but may widely include thermosetting resin and thermoplastic resin other than the polyimide resin. A method of forming the above-mentioned irradiation light absorbing layer 5 includes, for example, applying the above-mentioned polyimide resin and the like by a spin coating method and the like, and then performing a heating treatment and the like on the polyimide resin and the like. The thickness of the above-mentioned irradiation light absorbing layer 5 is in the range of 10 to 100 µm. When the thickness of the irradiation light absorbing layer 5 is less than 10 µm, the absorption and attenuation of the irradiation light in the irradiation light absorbing layer 5 have a tendency to become insufficient. When the above-mentioned thickness is greater than 100 µm, the results are excessive quality for the absorption of the irradiation light, and only the increase in the thickness of the optical waveguide device.

Next, as shown in Fig. 4B, the under cladding layer 20 free from the irradiation light absorbing agent is formed on the surface of the above-mentioned irradiation light absorbing layer 5. In the formation of this under cladding layer 20, the material for the formation of the under cladding layer 20 used herein is the material for the formation of the under cladding layer 2 free from the above-mentioned irradiation light absorbing agent in the above-mentioned first preferred embodiment. The under cladding layer 20 is formed in a manner similar to that in the above-mentioned first preferred embodiment except for the above.

Thereafter, as shown in Fig. 4C, the cores 3 and the over cladding layer 4 are formed in the order named on the surface of the above-mentioned under cladding layer 20 in a manner similar to that in the above-mentioned first preferred embodiment (with reference to Figs. 2B to 2D). In this manner, an optical waveguide device is provided in which the optical waveguide W₂ including the under cladding layer 20, the cores 3 and the over cladding layer 4 described above is formed on the surface of the metal substrate 1, with the above-mentioned irradiation light absorbing layer 5 there between.

In the step of forming the cores 3 according to this preferred embodiment, the irradiation light transmitted through the photosensitive resin layer for the formation of the cores 3 is also transmitted through the under cladding layer 20. Thereafter, the irradiation light is absorbed or attenuated in the above-mentioned irradiation light absorbing layer 5 before or after being reflected diffusely from the surface of the metal substrate 1. This suppresses the surface roughening of the side surfaces of the cores 3 in a manner similar to that in the above-mentioned first preferred embodiment. The optical waveguide W₂ in the above-mentioned optical waveguide device thus obtained has small light propagation losses to achieve good propagation of light

In the above-mentioned preferred embodiments, no components are formed on the back surface of the metal substrate 1 (the surface opposite from the surface on which the above-mentioned optical waveguides W₁ and W₂ are formed). However, the above-mentioned metal substrate 1 may be a metal substrate having a back surface on which an electric circuit is formed, with an insulation layer there between, or a metal substrate such that the electric circuit is formed with mounting pads on which optical elements such as a light emitting element, a light receiving element and the like are mounted.

In the above-mentioned preferred embodiments, the over cladding layer 4 is formed. However, this over cladding layer 4 may be dispensed with in some instances.

Next, inventive examples of the present invention will be described in conjunction with a comparative example. It should be noted that the present invention is not limited to the inventive examples.

### Examples

### Metal Substrate

SUS 304 foil [manufactured by Toyo Seihaku Co., Ltd., and having a thickness of 20 µm and an arithmetic mean roughness (Ra) of 0.8 µm ] was prepared.

### Material for Formation of Under Cladding Layer and Over Cladding Layer

A material for formation of an under cladding layer and an over cladding layer was prepared by mixing 35 parts by weight of bisphenoxyethanol fluorene glycidyl ether (component A) represented by the following general formula (1), 40 parts by weight of 3',4'-epoxycyclohexyl methyl-3,4-epoxycyclohexane carboxylate which was an alicyclic epoxy resin (CELLOXIDE 2021P manufactured by Daicel Chemical Industries, Ltd.) (component B), 25 parts by weight of (3'4'-epoxycyclohexane)methyl-3',4'-epoxycyclohexyl-carboxylate (CELLOXIDE 2081 manufactured by Daicel Chemical Industries, Ltd.) (component C), and 2 parts by weight of a 50% propione carbonate solution of 4,4'-bis[di(β-hydroxyethoxy)phenylsulfinio]phenyl sulfide-bis-hexafluoroantimonate (component D). 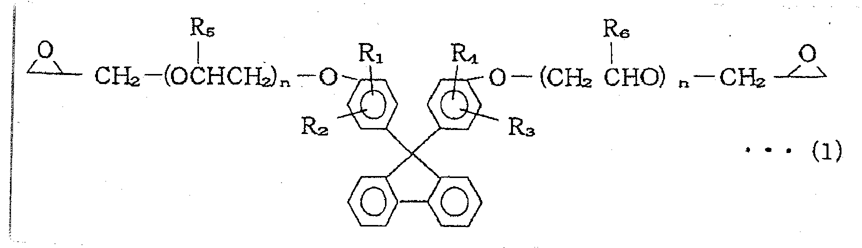 wherein R₁ to R₆ are hydrogen atoms, and n = 1.

### Material for Formation of Cores

A material for formation of cores was prepared by dissolving 70 parts by weight of the aforementioned component A, 30 parts by weight of 1,3,3-tris{4-[2-(3-oxetanyl)]butoxyphenyl}butane and one part by weight of the aforementioned component D in ethyl lactate.

### Manufacture of Optical Waveguide Device in Inventive Example 1

A material obtained by incorporating 1% by weight of an ultraviolet absorbing agent (TINUVIN 384-2 manufactured by Nihon Ciba-Geigy K.K.) into the material for the formation of the above-mentioned under cladding layer was prepared and applied to a surface of the above-mentioned SUS 304 foil by using a spin coater to form a coating layer having a thickness of 20 µm. Thereafter, the entire surface of the coating layer was irradiated with ultraviolet light from an ultra-high-pressure mercury-vapor lamp so as to be exposed to the ultraviolet light at an integrated dose of 1000 mJ/cm² (based on an i-line standard). Next, the resulting coating layer was allowed to stand for ten minutes on a hot plate at 120°C so that the reaction was completed. In this manner, the under cladding layer containing the ultraviolet absorbing agent was formed.

Next, the material for the formation of the above-mentioned cores was applied to a surface of the above-mentioned under cladding layer by using a spin coater, and thereafter was allowed to stand for five minutes on a hot plate at 70 °C so that the solvent was volatilized. Thus, a photosensitive resin layer for the formation of the cores was formed. Next, ultraviolet light was emitted from an ultra-high-pressure mercury-vapor lamp through a glass mask formed with a predetermined opening pattern (having an opening width of 50 µm, and a spacing of 200 µm between adjacent openings) so that the photosensitive resin layer was exposed to the ultraviolet light at an integrated dose of 2000 mJ/cm² (based on an i-line standard). Thereafter, the resulting photosensitive resin layer was allowed to stand for ten minutes on a hot plate at 120°C so that the reaction was completed. Next, development was performed with a spray developing machine using a developing solution including 90% by weight of γ-butyrolactone. Thus, the cores (having a height of 50 µm) was formed.

Then, the material for the formation of the above-mentioned over cladding layer was applied to the surface of the above-mentioned under cladding layer by using a spin coater so as to cover the above-mentioned cores. Thereafter, the over cladding layer was formed in a manner similar to that in the method of forming the above-mentioned under cladding layer. In this manner, an optical waveguide device (having a total thickness of 100 µm) was manufactured.

### Manufacture of Optical Waveguide Device in Inventive Example 2

The material for the formation of the under cladding layer which contained 2% by weight of the ultraviolet absorbing agent was used in Inventive Example 1 described above. Except for this, Inventive Example 2 was similar to Inventive Example 1 described above to manufacture an optical waveguide device.

### Manufacture of Optical Waveguide Device in Inventive Example 3

The material for the formation of the under cladding layer which contained 3% by weight of the ultraviolet absorbing agent was used in Inventive Example 1 described above. Except for this, Inventive Example 3 was similar to Inventive Example 1 described above to manufacture an optical waveguide device.

### Manufacture of Optical Waveguide Device in Inventive Example 4

The material for the formation of the under cladding layer which contained 5% by weight of the ultraviolet absorbing agent was used in Inventive Example 1 described above. Except for this, Inventive Example 4 was similar to Inventive Example 1 described above to manufacture an optical waveguide device.

### Manufacture of Optical Waveguide Device in Inventive Example 5

A photosensitive polyimide resin was applied to the surface of the above-mentioned SUS 304 foil by using a spin coater to form an ultraviolet absorbing layer having a thickness of 10 µm. Then, the material for the formation of the above-mentioned under cladding layer (free from the ultraviolet absorbing agent) was applied to a surface of the ultraviolet absorbing layer by using a spin coater to form the under cladding layer in a manner similar to that in Inventive Example 1 described above. Thereafter, the cores and the over cladding layer were formed in a manner similar to that in Inventive Example 1 described above.

### Manufacture of Optical Waveguide Device in Comparative Example 1

The under cladding layer (free from the ultraviolet absorbing agent), the cores and the over cladding layer were formed directly on the surface of the above-mentioned SUS 304 foil in a manner similar to that in Inventive Example 1 described above.

### Measurement of Ultraviolet Transmittance of Under Cladding Layer

Measurements of the transmittance of the under cladding layer of the optical waveguide device for ultraviolet light (i-line) having a wavelength of 365 nm were made in Inventive Examples 1 to 4 in which the ultraviolet absorbing agent was contained in the under cladding layer and in Comparative Example 1 in which the ultraviolet absorbing agent was not contained in the under cladding layer. The results of the measurements were also shown in Table 1 below.

### Evaluation of Core Side Surfaces

The side surfaces of the cores of the optical waveguide device in Inventive Examples 1 to 5 and Comparative Example 1 described above were observed with a scanning electron microscope. As a result, the side surfaces of the cores in Comparative Example 1 were formed as roughened surfaces, but the side surfaces of the cores in Inventive Examples 1 to 5 were significantly more even than those in Comparative Example 1. In inventive examples 1 to 4 the greater the content of the ultraviolet absorbing agent in the under cladding layer, the more even the side surfaces of the cores.

### Measurement of Core Width

Measurements of the width of the cores of the optical waveguide device were made with a scanning electron microscope in Inventive Examples 1 to 5 and Comparative Example 1 described above. The results of the measurements were also shown in Table 1 below.

### Measurement of Light Propagation Loss

The optical waveguide device was cut using a dicing machine (DAD522 manufactured by Disco Corporation) in Inventive Examples 1 to 5 and Comparative Example 1 described above so that the end surfaces of the cores were uncovered. Also, the above-mentioned optical waveguide device was cut to a length of 8 cm, and light propagation losses were measured. The results of the measurements were also shown in Table 1 below.

**Table 1**

| | Inventive Examples | | | | | Comp. Example |
|---|---|---|---|---|---|---|
| | 1 | 2 | 3 | 4 | 5 | 1 |
| Content of UV Absorbing Agent in Under Cladding Layer (wt %) | 1 | 2 | 3 | 5 | - (0) | 0 |
| Presence/Absence of UV Absorbing Layer under Under Cladding Layer | Absent | | | | Present | Absent |
| UV Transmittance of Under Cladding Layer (%) | 38.1 | 15.6 | 6.2 | 4.4 | - | 99.9 |
| Core Width (µm) | 54.1 | 52.3 | 51.2 | 50.0 | 52.6 | 57.7 |
| Light Propagation Loss(dB) | 2.74 | 2.18 | 2.27 | 3.39 | 2.39 | 6.64 |

The above-mentioned results show that the ultraviolet light reflected diffusely from the surface of the SUS 304 foil to reach the surfaces which are to become the side surfaces of the cores is attenuated in Inventive Examples 1 to 5, as compared with Comparative Example 1. This suppressed the surface roughening of the core side surfaces to provide the optical waveguide device excellent in light propagation performance in Inventive Examples 1 to 5. In particular, Inventive Examples 1 to 4 in which the ultraviolet absorbing agent is contained in the under cladding layer show that the higher the content of the ultraviolet absorbing agent in the under cladding layer is, the more the ultraviolet light in the under cladding layer is attenuated.

Although a specific form of embodiment of the instant invention has been described above and illustrated in the accompanying drawings in order to be more clearly understood, the above description is made by way of example and not as a limitation to the scope of the instant invention. It is contemplated that various modifications apparent to one of ordinary skill in the art could be made without departing from the scope of the invention which is to be determined by the following claims.

## Claims

1. A method of manufacturing an optical waveguide device, comprising the steps of:
forming an under cladding layer on a surface of a metal substrate which is a roughened surface;
forming a photosensitive resin layer for core formation on a surface of the under cladding layer; and
directing irradiation light onto the photosensitive resin layer to expose the photosensitive resin layer in a predetermined pattern to the irradiation light, thereby forming exposed portions of the photosensitive resin layer into cores,
wherein, in the step of forming the cores, the irradiation light directed onto said photosensitive resin layer is irradiation light transmitted through the photosensitive resin layer, reaching the roughened surface of said metal substrate and reflected therefrom, and
wherein said under cladding layer contains an irradiation light absorbing agent for absorbing said irradiation light.

2. The method of manufacturing the optical waveguide device according to claim 1, wherein 0.1 to 10% by weight of said irradiation light absorbing agent is contained in the under cladding layer.

3. A method of manufacturing an optical waveguide device, comprising the steps of:
forming an under cladding layer on a surface of a metal substrate which is a roughened surface;
forming a photosensitive resin layer for core formation on a surface of the under cladding layer; and
directing irradiation light onto the photosensitive resin layer to expose the photosensitive resin layer in a predetermined pattern to the irradiation light, thereby forming exposed portions of the photosensitive resin layer into cores,
wherein, in the step of forming the cores, the irradiation light directed onto said photosensitive resin layer is irradiation light transmitted through the photosensitive resin layer, reaching the roughened surface of said metal substrate and reflected therefrom, and
wherein an irradiation light absorbing layer for absorbing said irradiation light is formed on the surface of the metal substrate prior to the formation of said under cladding layer.

4. The method of manufacturing the optical waveguide device according to claim 3, wherein said irradiation light absorbing layer is made of polyimide resin.

5. The method of manufacturing the optical waveguide device according to any one of claims 1 to 4, wherein said irradiation light is ultraviolet light.
